# NEUE EUROPÄISCHE PATENTSCHRIFT

(11) **EP 3 298 859 B2**
(45) Veröffentlichungstag und Bekanntmachung des Hinweises auf die Entscheidung über den Einspruch: **09.11.2022**
(45) Hinweis auf die Patenterteilung: 15.01.2020
(21) Anmeldenummer: 16720570.7
(22) Anmeldetag: 26.04.2016
(51) Int. Cl.: H05B 6/06, H05B 6/12

(54) **GARGESCHIRR**
COOKING UTENSIL
USTENSILE DE CUISSON

(30) Priorität: 21.05.2015 ES 201530704
(43) Veröffentlichungstag der Anmeldung: 28.03.2018
(73) Patentinhaber: BSH Hausgeräte GmbH, 81739 München (DE)
(72) Erfinder: GARCIA MARTINEZ, Jose Andres, 50014 Zaragoza (ES); LLORENTE GIL, Sergio, 50009 Zaragoza (ES); MARZO ALVAREZ, Teresa del Carmen, 50012 Zaragoza (ES); MIR BEL, Jorge, 50019 Zaragoza (ES); RIVERA PEMAN, Julio, 50410 Cuarte de Huerva (Zaragoza) (ES); SANCHO DIAZ, Francisco Javier, 50009 Zaragoza (ES); VILLANUEVA VALERO, Beatriz, 50011 Zaragoza (ES)
(86) Internationale Anmeldenummer: PCT/IB2016/052356
(87) Internationale Veröffentlichungsnummer: WO 2016/185303

(56) Entgegenhaltungen:
- EP-A1- 2 548 636
- EP-A1- 2 548 636
- EP-A1- 2 757 658
- EP-A1- 2 757 660
- WO-A1-2012/134769
- WO-A1-2014/016032
- WO-A1-2014/056785
- WO-A1-2014/075923
- WO-A2-99/41950
- DE-A1-102009 027 403
- DE-A1-102010 039 072
- DE-A1-102010 043 770
- DE-A1-102010 043 864
- DE-T2- 60 308 358
- DE-U- 7 530 359
- ES-A1- 2 393 378
- ES-A1- 2 393 378
- US-A- 3 761 668
- US-A- 4 038 518
- US-A- 4 038 518
- US-A1- 2006 221 765
- US-A1- 2006 221 765
- US-A1- 2012 132 646
- US-B2- 8 529 118

## Beschreibung

Die Erfindung betrifft ein Gargeschirr nach dem Patentanspruch 1 und ein Kochsystem nach dem Patentanspruch 13.

Aus dem Stand der Technik ist bereits ein Gargeschirr bekannt, welches zu einem Aufstellen auf einer Kochfeldplatte einer Kochfeldvorrichtung zu einer Durchführung eines Heizvorgangs vorgesehen ist. Bei dem Heizvorgang wird das Gargeschirr durch Induktionsheizelemente erhitzt. Die Induktionsheizelemente sind unterhalb einer Kochfeldplatte der Kochfeldvorrichtung angeordnet und zu einem Beheizen des Gargeschirrs vorgesehen. An dem Gargeschirr ist eine Funktionseinheit angebracht, welche eine Bedieneinheit aufweist und durch Akkumulatoren mit Energie versorgt wird.

In EP 2 757 660 A1 ist eine Vorrichtung mit einer Empfängerspule in einem Gefäß und mit einer Übertragungseinheit offenbart. Die Empfängerspule ist dazu vorgesehen, kontaktlos elektrische Leistung zu empfangen und die Übertragungseinheit ist dazu vorgesehen, kontaktlos elektrische Leistung zu übertragen. Die Leistung wird dann mittels einer Stromkreiseinheit an eine Verbrauchereinheit übertragen. Die Verbrauchereinheit ist dazu vorgesehen, einen Verbraucher anzutreiben.

In EP 2 583 750 A1 und in EP 2 548 636 A1 ist jeweils ein Gargeschirr mit einem unteren magnetischen Kopplungselement und einem oberen magnetischen Kopplungselement offenbart, wobei das untere Kopplungselement dazu vorgesehen ist, mittels einem magnetischen Feld das obere magnetische Kopplungselement anzutreiben. Die Drehbewegung des oberen magnetischen Kopplungselements wird über eine Antriebswelle an einen Verbraucher übertragen.

In WO 2014/056785 A1 ist ein Gargeschirr mit einer Funktionseinheit offenbart, welche eine Steuereinheit aufweist. Zudem kann diese Funktionseinheit einen Mixermotor aufweisen. Die Bestandteile der Funktionseinheit sind allesamt außerhalb des Gargeschirrs angeordnet.

Die Aufgabe der Erfindung besteht insbesondere darin, ein gattungsgemäßes Gargeschirr mit verbesserten Eigenschaften hinsichtlich eines hohen Komforts bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

Es wird ein Gargeschirr, welches zu einem Aufstellen auf einer Kochfeldplatte zu einer Durchführung eines Heizvorgangs vorgesehen ist, mit einer Funktionseinheit und mit einer Empfangseinheit zu einem kontaktlosen Empfang von elektromagnetischer Energie, und zu einer Energieversorgung der Funktionseinheit vorgeschlagen. Unter einem "Gargeschirr" soll insbesondere eine Einheit verstanden werden, welche insbesondere dazu vorgesehen ist, in wenigstens einem Betriebszustand zumindest ein Lebensmittel aufzunehmen und insbesondere in wenigstens einem Betriebszustand in direktem Kontakt mit dem Lebensmittel zu stehen. Das Lebensmittel könnte beispielsweise ein zu garendes Lebensmittel, insbesondere Gargut, und/oder ein insbesondere mechanisch, vorteilhaft in einer über eine reine Beheizung hinausgehenden Weise, zu bearbeitendes Lebensmittel sein. Eine Kochfeldvorrichtung eines das Gargeschirr aufweisenden Kochsystems weist insbesondere zumindest ein Induktionsheizelement auf, welches insbesondere dazu vorgesehen ist, dem Gargeschirr zu der Durchführung des Heizvorgangs zumindest Energie, insbesondere in Form eines elektromagnetischen Wechselfelds, bereitzustellen und/oder zuzuführen. Unter einer "Kochfeldplatte" soll insbesondere eine Einheit verstanden werden, die in wenigstens einem Betriebszustand zu einem Aufstellen von Gargeschirr vorgesehen ist und die insbesondere dazu vorgesehen ist, einen Teil eines Kochfeldaußengehäuses, insbesondere einer Kochfeldvorrichtung und/oder eines eine Kochfeldvorrichtung aufweisenden Kochfelds, auszubilden. Die Kochfeldplatte besteht insbesondere wenigstens zu einem Großteil aus Glas und/oder Glaskeramik. Unter "wenigstens zu einem Großteil" soll insbesondere zu einem Anteil von mindestens 70 %, insbesondere zu mindestens 80 %, vorteilhaft zu mindestens 90 % und vorzugsweise zu mindestens 95 % verstanden werden. Unter einer "Funktionseinheit" soll insbesondere eine Einheit verstanden werden, welche dazu vorgesehen ist, wenigstens eine Funktion wahrzunehmen, die insbesondere über eine Funktion einer Aufnahme eines Lebensmittels hinausgeht. Insbesondere ist die Funktionseinheit dazu vorgesehen, mittels eines elektrischen Stroms betrieben zu werden. Die Empfangseinheit ist insbesondere dazu vorgesehen, in wenigstens einem Betriebszustand, vorteilhaft von zumindest einer Induktionseinheit bereitgestellte, elektromagnetische Energie aufzunehmen. Vorzugsweise ist die Empfangseinheit dazu vorgesehen, mittels der aufgenommenen Energie die Funktionseinheit wenigstens teilweise, insbesondere wenigstens zu einem Großteil und vorteilhaft komplett zu versorgen. Die Empfangseinheit könnte beispielsweise zu einer induktiven Energieübertragung und/oder zu einer kapazitiven Energieübertragung und/oder zu einer elektromagnetischen Energieübertragung und/oder zu einer Energieübertragung mittels Laser und/oder zu einer Energieübertragung mittels Schall vorgesehen sein. Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Durch die erfindungsgemäße Ausgestaltung kann insbesondere ein hoher Komfort erreicht werden. Insbesondere kann eine hohe Flexibilität hinsichtlich einer Art an zu versorgender Funktionseinheit und/oder hinsichtlich einer Art der übertragenen Energie ermöglicht werden. Mittels der Empfangseinheit kann insbesondere eine Vielzahl an verschiedenen Funktionseinheiten versorgt werden.

Ferner wird vorgeschlagen, dass die Funktionseinheit zumindest eine Steuereinheit aufweist. Unter einer "Steuereinheit" soll insbesondere eine elektronische Einheit verstanden werden, die eine Recheneinheit und insbesondere zusätzlich zu der Recheneinheit eine Speichereinheit mit einem darin gespeicherten Betriebsprogramm aufweist, das dazu vorgesehen ist, von der Recheneinheit ausgeführt zu werden. Die Steuereinheit ist insbesondere dazu vorgesehen, in wenigstens einem Betriebszustand mittels elektrischer Energie versorgt zu werden und insbesondere die elektrische Energie wenigstens teilweise, insbesondere abzüglich etwaiger durch einen Transport von elektrischem Strom verursachter Verluste, zu verbrauchen. Dadurch kann insbesondere eine besonders komfortable Ausgestaltung erreicht werden.

Zudem wird vorgeschlagen, dass die Steuereinheit dazu vorgesehen ist, in wenigstens einem Betriebszustand eine von der Empfangseinheit zu der Energieversorgung der Funktionseinheit bereitgestellte Energie zu verwalten. Die von der Empfangseinheit zu der Energieversorgung der Funktionseinheit bereitgestellte Energie entspricht insbesondere wenigstens im Wesentlichen, insbesondere abzüglich etwaiger durch Reibung und/oder durch einen Transport von elektrischem Strom verursachter Verluste, einer von der Empfangseinheit empfangenen Energie. Unter der Wendung, dass die Steuereinheit dazu vorgesehen ist, in wenigstens einem Betriebszustand die von der Empfangseinheit zu der Energieversorgung der Funktionseinheit bereitgestellte Energie "zu verwalten", soll insbesondere verstanden werden, dass die Steuereinheit dazu vorgesehen ist, in dem Betriebszustand die von der Empfangseinheit empfangene Energie aufzunehmen und zumindest einen Teil der Energie an zumindest einen weiteren Bestandteil der Funktionseinheit weiterzuleiten und insbesondere den weiteren Bestandteil mit der Energie zu versorgen. Der weitere Bestandteil könnte insbesondere zumindest ein Heizelement und/oder zumindest eine Ausgabeeinheit und/oder zumindest eine Antriebseinheit und/oder zumindest ein Sensor sein. Dadurch kann insbesondere eine hohe Energieeffizienz erreicht werden.

Die Steuereinheit ist insbesondere separat von einer Kochfeld-Steuereinheit ausgebildet. Beispielsweise könnte die Steuereinheit dazu vorgesehen sein, in Abhängigkeit einer Bedieneingabe mittels einer Bedieneinheit des Gargeschirrs zumindest einen weiteren Bestandteil der Funktionseinheit anzusteuern und/oder zu betreiben. Alternativ könnte die Steuereinheit zumindest einen Filter aufweisen und insbesondere dazu vorgesehen sein, zumindest hochfrequente Signale auszufiltern. Eine Kochfeld-Steuereinheit könnte insbesondere dazu vorgesehen sein, in Abhängigkeit einer Bedieneingabe mittels einer Kochfeld-Bedieneinheit zumindest einen weiteren Bestandteil der Funktionseinheit anzusteuern und/oder zu betreiben. Vorzugsweise ist die Steuereinheit dazu vorgesehen, in wenigstens einem Betriebszustand mit zumindest einer Kochfeld-Steuereinheit zu kommunizieren. Vorteilhaft ist die Steuereinheit dazu vorgesehen, unabhängig von Steuerbefehlen einer Kochfeld-Steuereinheit die Energie zu verwalten und/oder zumindest einen weiteren Bestandteil der Funktionseinheit anzusteuern und/oder zu betreiben. Insbesondere könnte die Steuereinheit dazu vorgesehen sein, Steuerbefehle von der Kochfeld-Steuereinheit zu empfangen und/oder zumindest eine Information, insbesondere zumindest bezüglich des weiteren Bestandteils, an die Kochfeleld-Steuereinheit zu übertragen. Die Steuereinheit könnte beispielsweise dazu vorgesehen sein, in Abhängigkeit zumindest eines Steuerbefehls von der Kochfeld-Steuereinheit dem weiteren Bestandteil die Energie zuzuführen. Insbesondere könnten die Kochfeld-Steuereinheit und die Steuereinheit mittels Bluetooth und/oder mittels Infrarot und/oder mittels eines lokalen Funknetzes miteinander kommunizieren. Unter einer "Kochfeld-Steuereinheit" soll insbesondere eine elektronische Einheit verstanden werden, die vorzugsweise in einer Steuer- und/oder Regeleinheit eines Kochfelds zumindest teilweise integriert ist und die vorzugsweise dazu vorgesehen ist, zumindest eine Versorgungselektronik, welche insbesondere zu einer Energieversorgung zumindest einer Induktionseinheit und/oder zumindest eines Induktionsheizelements vorgesehen ist, zu steuern und/oder zu regeln. Vorzugsweise umfasst die Kochfeld-Steuereinheit eine Recheneinheit und insbesondere zusätzlich zu der Recheneinheit eine Speichereinheit mit einem darin gespeicherten Steuer- und/oder Regelprogramm, das dazu vorgesehen ist, von der Recheneinheit ausgeführt zu werden. Beispielsweise kann eine Bedieneingabe wenigstens eines Betriebsparameters der Funktionseinheit über eine Kochfeld-Bedieneinheit einer Kochfeldvorrichtung, welche insbesondere Teil eines Kochfelds und/oder Kochfeldsystems ist, erfolgen. Dadurch kann insbesondere ein hoher Bedienkomfort erreicht werden. Ferner kann eine Komplexität der Steuereinheit vorteilhaft gering gehalten werden.

Ferner wird vorgeschlagen, dass die Empfangseinheit zumindest einen Induktor aufweist. Insbesondere weist die Empfangseinheit zumindest eine Spule auf, welche insbesondere dazu vorgesehen ist, in Abhängigkeit zumindest eines von zumindest einer Induktionseinheit bereitgestellten Magnetfelds, insbesondere eines elektromagnetischen Wechselfelds, magnetisiert zu werden und/oder zumindest einen Induktionsstrom zu erzeugen. Die Empfangseinheit könnte insbesondere zumindest zwei, vorteilhaft zumindest drei, besonders vorteilhaft zumindest fünf und vorzugsweise mehrere Induktoren aufweisen. Dadurch kann insbesondere eine preisgünstige Ausgestaltung erreicht werden. Insbesondere kann eine große Menge an Leistung übertragen werden.

Zudem wird vorgeschlagen, dass die Funktionseinheit zumindest ein Heizelement aufweist, welches zu einem Erwärmen von insbesondere in einem Lebensmittelaufnahmeraum angeordnetem Gargut vorgesehen ist. Insbesondere weist das Gargeschirr zumindest eine Gargeschirrgehäuseeinheit auf. Das Heizelement ist insbesondere in wenigstens einem montierten Zustand innerhalb der Gargeschirrgehäuseeinheit, insbesondere innerhalb eines von einem Außengehäuseteil der Gargeschirrgehäuseeinheit und einem Innengehäuseteil der Gargeschirrgehäuseeinheit begrenzten Zwischenraums, angeordnet. Vorteilhaft ist das Heizelement dazu vorgesehen, in wenigstens einem Betriebszustand das Innengehäuseteil der Gargeschirrgehäuseeinheit zu erhitzen. Die Funktionseinheit könnte insbesondere zumindest zwei, vorteilhaft zumindest drei, besonders vorteilhaft zumindest fünf und vorzugsweise mehrere Heizelemente aufweisen. Unter einem "Heizelement" soll in diesem Zusammenhang insbesondere ein Element verstanden werden, welches dazu vorgesehen ist, Energie, vorzugsweise elektrische Energie, in Wärme umzuwandeln und insbesondere zumindest einem Gargeschirr zuzuführen. Beispielsweise könnte das Heizelement als Widerstandsheizelement ausgebildet sein. Vorteilhaft ist das Heizelement insbesondere als Induktionsheizelement ausgebildet. Unter einem "Induktionsheizelement" soll in diesem Zusammenhang insbesondere ein Element verstanden werden, welches dazu vorgesehen ist, ein elektromagnetisches Wechselfeld insbesondere mit einer Frequenz zwischen 20 kHz und 100 kHz zu erzeugen, das insbesondere dazu vorgesehen ist, in einem aufgestellten, insbesondere metallischen, vorzugsweise ferromagnetischen Gargeschirrboden durch Wirbelstrominduktion und/oder Ummagnetisierungseffekte in Wärme umgewandelt zu werden. Dadurch kann insbesondere ein geringer Abstand zwischen dem Heizelement und einem Innengehäuseteil der Gargeschirrgehäuseeinheit und/oder eine hohe Energieeffizienz ermöglicht werden.

Vorzugsweise weist die Funktionseinheit zumindest eine Lebensmittelbearbeitungseinheit und zumindest eine Antriebseinheit auf, die dazu vorgesehen ist, die Lebensmittelbearbeitungseinheit anzutreiben. Unter einer "Lebensmittelbearbeitungseinheit" soll insbesondere eine Einheit verstanden werden, welche dazu vorgesehen ist, in wenigstens einem Betriebszustand zumindest ein Lebensmittel, welches insbesondere in dem Lebensmittelaufnahmeraum angeordnet ist, insbesondere in einer über eine reine Beheizung hinausgehenden Weise, zu bearbeiten, und welche insbesondere zumindest ein Bearbeitungswerkzeug aufweist, welches dazu vorgesehen ist, in wenigstens einem Betriebszustand in direktem Kontakt mit dem Lebensmittel zu stehen. Das Bearbeitungswerkzeug ist insbesondere dazu vorgesehen, in wenigstens einem Betriebszustand zumindest ein in dem Lebensmittelaufnahmeraum angeordnetes Lebensmittel zu bearbeiten, insbesondere zu mixen und/oder zu verrühren und/oder zu mahlen und/oder zu zerkleinern und/oder zu vermischen und/oder zu emulgieren und/oder zu kneten und/oder zu zerschneiden. Das Bearbeitungswerkzeug ist insbesondere dazu vorgesehen, in wenigstens einem Betriebszustand zumindest ein in dem Lebensmittelaufnahmeraum angeordnetes Lebensmittel insbesondere ausgehend von zumindest einem ruhenden Zustand in Bewegung zu versetzen und/oder insbesondere ausgehend von einem bewegten Zustand in Bewegung zu halten. In wenigstens einem Betriebszustand der Lebensmittelbearbeitungseinheit ist insbesondere zumindest ein Teil der Lebensmittelbearbeitungseinheit, insbesondere das Bearbeitungswerkzeug, dazu vorgesehen, in direktem Kontakt mit dem Lebensmittel zu stehen. Die Lebensmittelbearbeitungseinheit ist insbesondere dazu vorgesehen, unterschiedliche Arten und/oder Konsistenzen von Lebensmitteln zu bearbeiten, wie beispielsweise Teig und/oder Flüssigkeit und/oder zumindest teilweise fluide Materialien und/oder Saucen und/oder zumindest teilweise feste Lebensmittel. Insbesondere weist die Lebensmittelbearbeitungseinheit mindestens zwei, insbesondere mindestens drei, vorteilhaft mindestens fünf und vorzugsweise mindestens sieben verschiedene Bearbeitungswerkzeuge auf. Die Antriebseinheit ist dazu vorgesehen, in wenigstens einem Betriebszustand der Lebensmittelbearbeitungseinheit zumindest Antriebsenergie zuzuführen, welche die Antriebseinheit insbesondere aus der von der Empfangseinheit zu der Energieversorgung der Funktionseinheit bereitgestellten und insbesondere von der Steuereinheit weitergeleiteten Energie erzeugt, insbesondere gewinnt und/oder abzweigt und/oder zur Verfügung stellt. Dadurch kann insbesondere ein hoher Komfort erreicht werden. Insbesondere kann eine hohe Energieeffizienz ermöglicht werden, insbesondere aufgrund einer Bewegung eines zu garenden zumindest teilweise fluiden Lebensmittels. Eine komfortable und/oder einfache Bedienbarkeit kann insbesondere ermöglicht werden, wobei insbesondere Garparameter in einfacher Weise kontrolliert und/oder beeinflusst werden können. Insbesondere kann eine hohe Flexibilität erzielt werden. Insbesondere kann eine geringe Wahrscheinlichkeit eines Anbrennens und/oder eine geringe Quellzeit erzielt werden, wodurch insbesondere eine hohe Beständigkeit und/oder eine langlebige Ausgestaltung eines Gargeschirrs, innerhalb dessen die Lebensmittelbearbeitungseinheit angeordnet ist, erreicht werden kann/können. Durch eine Bewegung eines zu garenden zumindest teilweise fluiden Lebensmittels können insbesondere reproduzierbare Garergebnisse und/oder eine geringe Inhomogenität in einem zu garenden Lebensmittel erreicht werden.

Die Funktionseinheit könnte beispielsweise zumindest einen Sensor aufweisen. Der Sensor könnte insbesondere dazu vorgesehen sein, zumindest eine Bewegungskomponente, insbesondere zumindest ein Drehmoment und/oder zumindest ein Beschleunigungsmoment und/oder ein Rotationsmoment und/oder eine Rotationsgeschwindigkeit, der Lebensmittelbearbeitungseinheit zu detektieren. Der Sensor könnte beispielsweise dazu vorgesehen sein, zumindest eine Sensorkenngröße, welche insbesondere die Bewegungskomponente der Lebensmittelbearbeitungseinheit charakterisiert, an die Steuereinheit und/oder die Kochfeld-Steuereinheit zu übermitteln. Insbesondere könnte der Sensor zu einer optischen Detektion der Bewegungskomponente der Lebensmittelbearbeitungseinheit vorgesehen und beispielsweise als Fotozelle ausgebildet sein. Alternativ oder zusätzlich könnte der Sensor zu einer Detektion der Bewegungskomponente der Lebensmittelbearbeitungseinheit mittels eines Magnetfelds vorgesehen sein. Alternativ oder zusätzlich könnte der Sensor dazu vorgesehen sein, eine Temperatur und/oder einen PH-Wert und/oder ein Gewicht und/oder einen Garzustand, wie beispielsweise Kochen und/oder Simmern und/oder Sieden und/oder Überkochen, eines in dem Lebensmittelaufnahmeraum angeordneten Lebensmittels zu detektieren. Der Sensor könnte beispielsweise ein Infrarot-Sensor und/oder ein Widerstands-Sensor, beispielsweise ein NTC-Widerstand und/oder ein PTC-Widerstand, und/oder ein akustischer Sensor, beispielsweise ein Mikrophon, und/oder ein Drucksensor und/oder ein Gewichtssensor zu einer Detektion eines Gewichts von in dem Lebensmittelaufnahmeraum angeordneten Lebensmitteln und/oder ein Volumensensor zu einer Detektion eines in dem Lebensmittelaufnahmeraum angeordneten Volumens an Lebensmittel sein. Insbesondere könnte die Steuereinheit und/oder die Kochfeld-Steuereinheit dazu vorgesehen sein, in Abhängigkeit der Sensorkenngröße eine Änderung einer Bewegungskomponente eines zu bearbeitenden Lebensmittels zu ermitteln und insbesondere zumindest einen automatischen Bearbeitungsvorgang und/oder zumindest einen automatischen Garvorgang durchzuführen.

Alternativ oder zusätzlich könnte die Funktionseinheit insbesondere zumindest eine Ausgabeeinheit aufweisen. Die Ausgabeeinheit könnte insbesondere zu einer Ausgabe zumindest einer Ausgabegröße, welche insbesondere als Schall und/oder Licht ausgebildet sein könnte, vorgesehen sein. Vorteilhaft könnte die Ausgabeeinheit als eine Anzeigeeinheit ausgebildet sein und insbesondere zumindest eine LED aufweisen. Die Ausgabeeinheit könnte insbesondere zu einer Anzeige der Ausgabegröße vorgesehen sein. Die Kochfeld-Steuereinheit könnte insbesondere dazu vorgesehen sein, in wenigstens einem Betriebszustand wenigstens einen mit dem Gargeschirr verknüpften Status mittels der Ausgabeeinheit auszugeben. Die Kochfeld-Steuereinheit ist dazu vorgesehen, in dem Betriebszustand unterschiedliche Status durch unterschiedliche Intensitätsverläufe einer Ausgabegröße der Ausgabeeinheit auszugeben. Insbesondere könnte die Kochfeld-Steuereinheit dazu vorgesehen sein, in dem Betriebszustand unterschiedliche Status durch unterschiedliche Frequenzspektren einer Ausgabegröße der Ausgabeeinheit auszugeben. Die Kochfeldvorrichtung weist insbesondere zumindest eine Kochfeld-Bedieneinheit auf. Insbesondere könnte die Kochfeld-Steuereinheit dazu vorgesehen sein, eine Zuordnung des Gargeschirrs zu einem Bedienelement der Kochfeld-Bedieneinheit mittels der Ausgabeeinheit und der Kochfeld-Bedieneinheit anzuzeigen. Insbesondere könnte die Kochfeld-Steuereinheit dazu vorgesehen sein, in dem Betriebszustand die Zuordnung durch Verwendung zumindest im Wesentlichen der gleichen Farbe bei einer Anzeige mittels der Ausgabeeinheit und mittels der Kochfeld-Bedieneinheit anzuzeigen.

Ferner wird vorgeschlagen, dass die Antriebseinheit dazu vorgesehen ist, zu einem Antrieb der Lebensmittelbearbeitungseinheit zumindest ein Magnetfeld bereitzustellen. Insbesondere ist die Antriebseinheit dazu vorgesehen, die von der Empfangseinheit bereitgestellte Energie und/oder die von der Steuereinheit weitergeleitete Energie wenigstens zu einem Großteil in elektromagnetische Energie umzuwandeln. Beispielsweise könnte die Antriebseinheit dazu vorgesehen sein, der Lebensmittelbearbeitungseinheit insbesondere direkt die elektromagnetische Energie bereitzustellen und insbesondere die Lebensmittelbearbeitungseinheit mittels der elektromagnetischen Energie anzutreiben, wie beispielsweise mittels eines Magnetfelds. Alternativ könnte die Antriebseinheit dazu vorgesehen sein, die elektromagnetische Energie in eine weitere Energieform umzuwandeln, wie beispielsweise in mechanische Energie, und der Lebensmittelbearbeitungseinheit insbesondere die weitere Energieform bereitzustellen und vorteilhaft die Lebensmittelbearbeitungseinheit mittels der weiteren Energieform anzutreiben. Dadurch kann insbesondere ein besonders vorteilhafter Antrieb der Lebensmittelbearbeitungseinheit erreicht werden. Insbesondere kann eine hohe Effizienz ermöglicht werden.

Zudem wird vorgeschlagen, dass die Antriebseinheit zumindest einen Elektromotor aufweist, der dazu vorgesehen ist, die Lebensmittelbearbeitungseinheit anzutreiben. Die Antriebseinheit weist insbesondere zumindest eine Welle auf. In diesem Fall ist die Welle vorzugsweise dazu vorgesehen, in wenigstens einem montierten Zustand den Elektromotor und die Lebensmittelbearbeitungseinheit wenigstens im Wesentlichen miteinander zu verbinden. Vorzugsweise ist die Antriebseinheit dazu vorgesehen, die Lebensmittelbearbeitungseinheit mittels des Elektromotors über die Welle anzutreiben, welche insbesondere durch ein einem Lebensmittelaufnahmeraum zugewandten Innengehäuseteil der Gargeschirrgehäuseeinheit hindurchgreift. In einem alternativen Ausführungsbeispiel könnte die Antriebseinheit insbesondere zumindest einen Permanentmagnet ausweisen, welcher in wenigstens einem Betriebszustand mit dem Elektromotor durch die Welle verbunden sein könnte. Der Permanentmagnet könnte insbesondere dazu vorgesehen sein, das von der Antriebseinheit bereitgestellte Magnetfeld bereitzustellen und/oder zu erzeugen. Insbesondere könnte die Antriebseinheit dazu vorgesehen sein, die Lebensmittelbearbeitungseinheit mittels des von dem Permanentmagneten bereitgestellten Magnetfelds anzutreiben. Insbesondere könnte der Permanentmagnet dazu vorgesehen sein, in wenigstens einem Betriebszustand mit zumindest einem Magnetelement der Lebensmittelbearbeitungseinheit zu wechselwirken und vorteilhaft diesem Magnetelement das Magnetfeld zu dem Antrieb bereitzustellen. In einem weiteren alternativen Ausführungsbeispiel könnte die Antriebseinheit insbesondere zumindest zwei Elektromagnete ausweisen, welche insbesondere dazu vorgesehen sein könnten, das Magnetfeld zu dem Antrieb der Lebensmittelbearbeitungseinheit bereitzustellen. Unter einem "Elektromotor" soll insbesondere eine Baueinheit verstanden werden, welche dazu vorgesehen ist, elektrische Energie in Bewegungsenergie umzuwandeln. Vorteilhaft ist die Antriebseinheit dazu vorgesehen, die elektromagnetische Energie wenigstens zu einem Großteil in Bewegungsenergie umzuwandeln und diese Bewegungsenergie vorteilhaft an die Lebensmittelbearbeitungseinheit zu übertragen. Die Antriebseinheit ist insbesondere dazu vorgesehen, die Lebensmittelbearbeitungseinheit in Bewegung zu versetzen und/oder in Bewegung zu halten. Insbesondere ist die Bewegung als eine wenigstens im Wesentlichen um eine Drehachse rotierende Rotationsbewegung ausgebildet. Dadurch kann insbesondere auf Standardkomponenten zurückgegriffen werden, wodurch insbesondere geringe Kosten ermöglicht werden können. Insbesondere kann eine hohe Zuverlässigkeit erzielt werden.

Weiterhin wird vorgeschlagen, dass die Antriebseinheit dazu vorgesehen ist, zu dem Antrieb der Lebensmittelbearbeitungseinheit ein wenigstes im Wesentlichen um zumindest eine Drehachse rotierendes und in einen Lebensmittelaufnahmeraum wenigstens teilweise eingreifendes Magnetfeld bereitzustellen. Der Lebensmittelaufnahmeraum ist insbesondere zu einer Aufnahme zumindest eines Lebensmittels vorgesehen. Unter einem "wenigstens im Wesentlichen um zumindest eine Drehachse rotierenden" Magnetfeld soll insbesondere ein Magnetfeld verstanden werden, dessen Polarität sich insbesondere im zeitlichen Mittel um die Drehachse bewegt. Beispielsweise könnte das Magnetfeld wenigstens im Wesentlichen kontinuierlich um die Drehachse rotieren. Das Magnetfeld könnte insbesondere schrittweise, insbesondere in kleinen beispielsweise diskreten Stufen, um die Drehachse rotieren. Unter einem "wenigstens teilweise in einen Lebensmittelaufnahmeraum eingreifenden" Magnetfeld soll insbesondere ein Magnetfeld verstanden werden, dessen Feldlinien zumindest zu einem Teil in den Lebensmittelaufnahmeraum eingreifen und in diesem insbesondere messbar vorhanden sind, wobei ein weiterer Teil der Feldlinien außerhalb des Lebensmittelaufnahmeraums angeordnet sein könnte. Dadurch kann ein besonders vorteilhafter Antrieb der Lebensmittelbearbeitungseinheit ermöglicht werden.

Ferner wird vorgeschlagen, dass die Lebensmittelbearbeitungseinheit zumindest ein Magnetelement aufweist, welches dazu vorgesehen ist, mit dem Magnetfeld zu wechselwirken. Insbesondere ist das Magnetelement dazu vorgesehen, das Magnetfeld aufzunehmen und insbesondere in Abhängigkeit des Magnetfelds eine Rotationsbewegung um die Drehachse auszuführen. Beispielsweise könnte das Magnetelement ein Permanentmagnet und/oder ein Elektromagnet und/oder ein Induktor sein. Das Magnetelement könnte beispielsweise einstückig mit dem Bearbeitungswerkzeug ausgebildet sein, welches insbesondere zumindest einen Magnet aufweist und zu einem Empfang des von der Antriebseinheit erzeugten Magnetfelds vorgesehen sein könnte. Alternativ könnten das Magnetelement und das Bearbeitungswerkzeug als separate Elemente ausgebildet und insbesondere in wenigstens einem montierten Zustand insbesondere mechanisch miteinander verbunden sein. Dadurch kann insbesondere auf eine Ausnehmung in einem den Lebensmittelaufnahmeraum begrenzenden Innengehäuseteil vermieden und/oder eine einfache Reinigung ermöglicht werden.

Zudem wird vorgeschlagen, dass das Gargeschirr zumindest eine Gargeschirrgehäuseeinheit aufweist, welche zumindest ein einem Lebensmittelaufnahmeraum abgewandtes Außengehäuseteil und zumindest ein dem Lebensmittelaufnahmeraum zugewandtes Innengehäuseteil aufweist und innerhalb welcher die Funktionseinheit und insbesondere zusätzlich die Empfangseinheit wenigstens teilweise angeordnet ist/sind. Die Gargeschirrgehäuseeinheit definiert insbesondere den Lebensmittelaufnahmeraum. Das Innengehäuseteil begrenzt vorteilhaft den Lebensmittelaufnahmeraum wenigstens im Wesentlichen. Das Außengehäuseteil definiert vorteilhaft eine äußere, insbesondere für einen Bediener in einem Betriebszustand sichtbare Gestalt der Gargeschirrgehäuseeinheit und insbesondere des Gargeschirrs. Das Außengehäuseteil und das Innengehäuseteil sind in wenigstens einem montierten Zustand insbesondere mechanisch miteinander verbunden und begrenzen insbesondere zumindest einen Zwischenraum. In wenigstens einem Betriebszustand ist die Funktionseinheit insbesondere wenigstens teilweise von der Gargeschirrgehäuseeinheit umschlossen. Insbesondere ist die Funktionseinheit in wenigstens einem Betriebszustand wenigstens teilweise zwischen dem Außengehäuseteil und dem Innengehäuseteil, insbesondere in dem Zwischenraum, angeordnet. In wenigstens einem Betriebszustand ist die Funktionseinheit insbesondere in dem Gargeschirr, vorteilhaft in der Gargeschirrgehäuseeinheit, wenigstens teilweise integriert. Die Wendung, dass die Funktionseinheit "wenigstens teilweise" in der Gargeschirrgehäuseeinheit angeordnet ist, soll so verstanden werden, dass ein erster Bestandteil der Funktionseinheit in der Gargeschirrgehäuseeinheit, und zwar in dem Zwischenraum der Gargeschirrgehäuseeinheit, angeordnet und ein zweiter Bestandteil der Funktionseinheit außerhalb der Gargeschirrgehäuseeinheit in dem Lebensmittelaufnahmeraum angeordnet ist. Vorteilhaft sind in wenigstens einem Betriebszustand die Antriebseinheit und/oder die Empfangseinheit und/oder das Heizelement und/oder der Sensor innerhalb der Gargeschirrgehäuseeinheit, insbesondere in dem Zwischenraum, angeordnet, wobei die Empfangseinheit erfindungsgemäß in dem Zwischenraum angeordnet ist. Die Lebensmittelbearbeitungseinheit ist insbesondere außerhalb des Zwischenraums und vorteilhaft in dem Lebensmittelaufnahmeraum angeordnet. Dadurch kann insbesondere eine geschützte Anordnung eines Großteils der Funktionseinheit erreicht werden. Insbesondere kann eine hohe Stabilität erzielt werden.

Weiterhin wird vorgeschlagen, dass das Außengehäuseteil und das Innengehäuseteil aus Materialien mit unterschiedlichen magnetischen Eigenschaften bestehen. Insbesondere besteht das Innengehäuseteil wenigstens zu einem Großteil aus einem Metall, insbesondere einem magnetischen Metall, vorteilhaft aus einem ferromagnetischen Metall. Das Innengehäuseteil könnte beispielsweise wenigstens zu einem Großteil aus Eisen und/oder ferromagnetischem Stahl bestehen. Insbesondere besteht das Außengehäuseteil wenigstens zu einem Großteil aus einem Nichtmetall. Das Außengehäuseteil könnte beispielsweise wenigstens zu einem Großteil aus Kunststoff und/oder Keramik bestehen. Dadurch kann insbesondere eine Erwärmung auf dafür vorgesehene Bereiche beschränkt und vorteilhaft wenigstens im Wesentlichen zeitgleich in dafür vorgesehenen weiteren Bereichen eine Energieübertragung ermöglicht werden. Insbesondere kann eine hohe Flexibilität hinsichtlich einer Gestaltungsmöglichkeit erreicht werden.

Ferner wird vorgeschlagen, dass das Außengehäuseteil und das Innengehäuseteil zumindest einen Zwischenraum definieren, welcher wenigstens zu einem Großteil mit einem Isolationsmaterial gefüllt ist. Die Gargeschirrgehäuseeinheit weist insbesondere zumindest das Isolationsmaterial auf, welches in wenigstens einem montierten Zustand zwischen dem Außengehäuseteil und dem Innengehäuseteil angeordnet ist. Insbesondere besteht das Isolationsmaterial wenigstens zu einem Großteil aus einem Material mit einer geringen Wärmeleitfähigkeit. Das Isolationsmaterial könnte beispielsweise wenigstens zu einem Großteil aus Kunststoff und/oder Mineralwolle und/oder Teflon bestehen. Dadurch kann insbesondere eine hohe Effizienz ermöglicht werden. Insbesondere können Baueinheiten, welche in dem Zwischenraum angeordnet sind, geschützt gelagert werden.

In einer weiteren Ausgestaltung wird ein Kochsystem mit zumindest einem erfindungsgemäßen Gargeschirr und mit zumindest einer Kochfeldvorrichtung, insbesondere einer Induktionskochfeldvorrichtung, vorgeschlagen, die zumindest eine Induktionseinheit aufweist, welche zumindest zu einer Bereitstellung von Energie für die Empfangseinheit des Gargeschirrs vorgesehen ist. Unter einer "Kochfeldvorrichtung" soll insbesondere zumindest ein Teil, insbesondere eine Unterbaugruppe, eines Kochfelds, insbesondere eines Induktionskochfelds, verstanden werden. Insbesondere kann die Kochfeldvorrichtung auch das gesamte Kochfeld, insbesondere das gesamte Induktionskochfeld, umfassen. Unter einer "Induktionseinheit" soll insbesondere eine Einheit verstanden werden, welche dazu vorgesehen ist, in wenigstens einem Betriebszustand zumindest ein elektromagnetisches Wechselfeld zu einer Energieübertragung bereitzustellen. Die Induktionseinheit ist insbesondere dazu vorgesehen, in wenigstens einem Betriebszustand mittels des elektromagnetischen Wechselfelds in der Empfangseinheit des Gargeschirrs zumindest einen Induktionsstrom zu erzeugen und/oder hervorzurufen. Die Kochfeldvorrichtung umfasst insbesondere zumindest eine Kochfeld-Bedieneinheit, welche zumindest zu einer Eingabe zumindest eines Bearbeitungsparameters, insbesondere einer Rotationsgeschwindigkeit und/oder einer Bearbeitungsstartzeit und/oder einer Bearbeitungsendzeit und/oder einer Bearbeitungsdauer, der Lebensmittelbearbeitungseinheit vorgesehen ist. Die Kochfeld-Bedieneinheit ist insbesondere dazu vorgesehen, einem Bediener zumindest zwei, insbesondere zumindest drei, vorteilhaft zumindest vier und vorzugsweise zumindest fünf Bearbeitungsparameter zur Auswahl bereitzustellen und/oder anzuzeigen. Insbesondere umfasst die Kochfeldvorrichtung zumindest eine Kochfeld-Steuereinheit, welche dazu vorgesehen ist, zumindest die Steuereinheit und/oder die Antriebseinheit anzusteuern. Insbesondere ist die Kochfeld-Steuereinheit, insbesondere mittels einer Ansteuerung der Steuereinheit und/oder der Antriebseinheit, zu einer Steuerung und/oder Regelung des Bearbeitungsparameters der Lebensmittelbearbeitungseinheit vorgesehen. Die Kochfeld-Steuereinheit ist insbesondere dazu vorgesehen, die Steuereinheit und/oder die Antriebseinheit in Abhängigkeit von einer Bedieneingabe mittels einer Kochfeld-Bedieneinheit anzusteuern. Die Induktionseinheit könnte beispielsweise zumindest ein von einem Induktionsheizelement verschieden ausgebildetes Energieübertragungselement aufweisen, das insbesondere dazu vorgesehen sein könnte, in wenigstens einem Betriebszustand die Energie für die Empfangseinheit bereitzustellen. Insbesondere könnte das Energieübertragungselement zumindest einen Induktor und/oder zumindest eine Spule aufweisen. Das Energieübertragungselement könnte insbesondere dazu vorgesehen sein, in wenigstens einem Betriebszustand die Energie für die Empfangseinheit zumindest mittels einer induktiven Energieübertragung bereitzustellen. Vorteilhaft weist die Induktionseinheit zumindest ein Induktionsheizelement auf, das insbesondere dazu vorgesehen ist, in wenigstens einem Betriebszustand die Energie für die Empfangseinheit bereitzustellen. Insbesondere ist das Induktionsheizelement dazu vorgesehen, in wenigstens einem Betriebszustand, insbesondere zusätzlich zu der Bereitstellung von Energie für die Empfangseinheit, zumindest einen Teil des Gargeschirrs, insbesondere zumindest einen Teil des Innengehäuseteils des Gargeschirrs, zu erhitzen. Dadurch kann insbesondere ein hoher Komfort erreicht werden.

Das Gargeschirr und das Kochsystem sollen hierbei nicht auf die oben beschriebene Anwendung und Ausführungsform beschränkt sein. Insbesondere kann das Gargeschirr und das Kochsystem zu einer Erfüllung einer hierin beschriebenen Funktionsweise eine von einer hierin genannten Anzahl von einzelnen Elementen, Bauteilen und Einheiten abweichende Anzahl aufweisen.

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein Kochsystem mit einem Gargeschirr und mit einer Kochfeldvorrichtung in einer schematischen Schnittdarstellung,
- Fig. 2: das Kochsystem mit der Kochfeldvorrichtung und mit dem Gargeschirr in einer schematischen Draufsicht,
- Fig. 3: einen vergrößerten Ausschnitt aus Figur 2,
- Fig. 4: eine Kochfeld-Bedieneinheit der Kochfeldvorrichtung in einer schematischen Draufsicht,
- Fig. 5: ein alternatives Kochsystem mit einer Kochfeldvorrichtung und mit einem Gargeschirr in einer schematischen Schnittdarstellung und
- Fig. 6: ein alternatives Kochsystem mit einer Kochfeldvorrichtung und mit einem Gargeschirr in einer schematischen Schnittdarstellung.

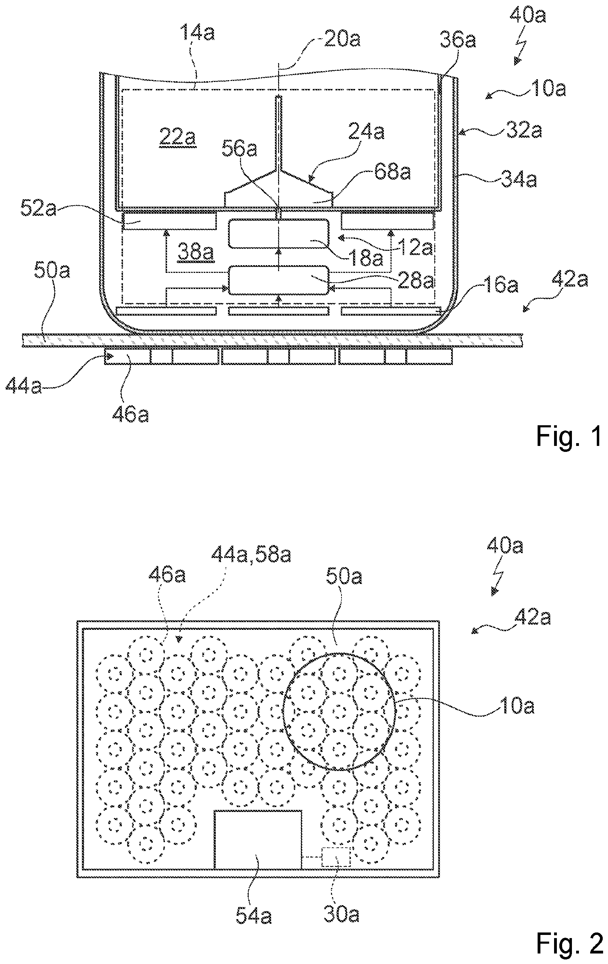

Fig. 1 zeigt ein Kochsystem 40a, das als ein Induktionskochsystem ausgebildet ist, mit einem Gargeschirr 10a und mit einer Kochfeldvorrichtung 42a, die als eine Induktionskochfeldvorrichtung ausgebildet ist. Die Kochfeldvorrichtung 42a umfasst eine Kochfeldplatte 50a. In einem montierten Zustand bildet die Kochfeldplatte 50a einen Teil eines Kochfeldaußengehäuses aus. Die Kochfeldplatte 50a ist zu einem Aufstellen von Gargeschirr 10a vorgesehen.

Das Gargeschirr 10a weist eine Gargeschirrgehäuseeinheit 32a auf. Die Gargeschirrgehäuseeinheit 32a definiert einen Lebensmittelaufnahmeraum 22a. Die Gargeschirrgehäuseeinheit 32a des Gargeschirrs 10a weist ein dem Lebensmittelaufnahmeraum 22a abgewandtes Außengehäuseteil 34a auf. Die Gargeschirrgehäuseeinheit 32a des Gargeschirrs 10a weist ein dem Lebensmittelaufnahmeraum 22a zugewandtes Innengehäuseteil 36a auf.

Das Außengehäuseteil 34a und das Innengehäuseteil 36a bestehen aus Materialien mit unterschiedlichen magnetischen Eigenschaften. Das Außengehäuseteil 34a besteht zu einem Großteil aus einem Nichtmetall. Das Innengehäuseteil 36a besteht zu einem Großteil aus einem ferromagnetischen Metall.

Das Außengehäuseteil 34a und das Innengehäuseteil 36a definieren einen Zwischenraum 38a. Das Gargeschirr 10a weist ein Isolationsmaterial (nicht dargestellt) auf. Der Zwischenraum 38a ist zu einem Großteil mit dem Isolationsmaterial gefüllt.

Das Gargeschirr 10a weist eine Funktionseinheit 14a auf. In einem montierten Zustand ist die Funktionseinheit 14a teilweise innerhalb der Gargeschirrgehäuseeinheit 32a angeordnet. Die Funktionseinheit 14a weist eine Lebensmittelbearbeitungseinheit 24a auf. In dem montierten Zustand ist die Lebensmittelbearbeitungseinheit 24a innerhalb des Lebensmittelaufnahmeraums 22a angeordnet. Die Lebensmittelbearbeitungseinheit 24a weist ein Bearbeitungswerkzeug 68a auf. Das Bearbeitungswerkzeug 68a ist zu einer Bearbeitung von in dem Lebensmittelaufnahmeraum 22a angeordneten Lebensmitteln vorgesehen. In dem montierten Zustand ist das Bearbeitungswerkzeug 68a in dem Lebensmittelaufnahmeraum 22a angeordnet. In dem montierten Zustand ist die Lebensmittelbearbeitungseinheit 24a in einem Nahbereich eines Bodens des Innengehäuseteils 36a angeordnet.

Die Funktionseinheit 14a weist eine Antriebseinheit 12a auf. Die Antriebseinheit 12a treibt in einem Betriebszustand die Lebensmittelbearbeitungseinheit 24a an. In dem montierten Zustand ist die Antriebseinheit 12a innerhalb der Gargeschirrgehäuseeinheit 32a angeordnet. Die Antriebseinheit 12a ist in dem montierten Zustand in dem Zwischenraum 38a angeordnet. In dem montierten Zustand ist die Antriebseinheit 12a in einem Nahbereich des Bodens des Innengehäuseteils 36a angeordnet. Die Antriebseinheit 12a und die Lebensmittelbearbeitungseinheit 24a sind in dem montierten Zustand durch den Boden des Innengehäuseteils 36a voneinander getrennt.

In dem Zwischenraum 38a ist in dem montierten Zustand zusätzlich zu der Antriebseinheit 12a eine Empfangseinheit 16a des Gargeschirrs 10a angeordnet. Das Gargeschirr 10a weist die Empfangseinheit 16a auf. Die Empfangseinheit 16a ist zu einem kontaktlosen Empfang von Energie vorgesehen. In dem montierten Zustand ist die Empfangseinheit 16a in einem Nahbereich eines Bodens des Außengehäuseteils 34a angeordnet.

Die Empfangseinheit 16a weist einen Induktor auf. In dem Betriebszustand ist die Empfangseinheit 16a dazu vorgesehen, durch ein elektromagnetisches Wechselfeld magnetisiert zu werden. Die Empfangseinheit 16a ist zu einem Empfang einer mittels induktiver Energieübertragung übertragenen Energie vorgesehen. In dem Betriebszustand ist die Empfangseinheit 16a zu einer Energieversorgung der Funktionseinheit 14a vorgesehen.

Die Antriebseinheit 12a stellt in dem Betriebszustand ein Magnetfeld zu dem Antrieb der Lebensmittelbearbeitungseinheit 24a bereit. Die Antriebseinheit 12a weist einen Elektromotor 18a auf. In dem Betriebszustand stellt die Antriebseinheit 12a das Magnetfeld zu dem Antrieb der Lebensmittelbearbeitungseinheit 24a innerhalb des Elektromotors 18a bereit. Der Elektromotor 18a erzeugt mittels des Magnetfelds eine Rotationsbewegung um eine Drehachse 20a. In dem Betriebszustand treibt der Elektromotor 18a die Lebensmittelbearbeitungseinheit 24a mittels der Rotationsbewegung an.

Das Gargeschirr 10a weist eine Welle 56a auf. Die Welle 56a verbindet in dem montierten Zustand den Elektromotor 18a und die Lebensmittelbearbeitungseinheit 24a miteinander. In dem Betriebszustand leitet die Welle 56a die von dem Elektromotor 18a erzeugte Rotationsbewegung an die Lebensmittelbearbeitungseinheit 24a weiter.

Die Welle 56a ist in dem montierten Zustand teilweise in dem Zwischenraum 38a angeordnet. Das Innengehäuseteil 36a weist eine Ausnehmung (nicht dargestellt) auf. In dem montierten Zustand greift die Welle 56a durch die Ausnehmung des Innengehäuseteils 36a hindurch. Zwischen der Welle 56a und einer seitlichen Begrenzung der Ausnehmung ist eine Dichtung angeordnet, welche ein Eindringen von in dem Lebensmittelaufnahmeraum 22a angeordneten Lebensmitteln in den Zwischenraum 38a im Wesentlichen verhindert.

Die Funktionseinheit 14a weist eine Steuereinheit 28a auf. In dem montierten Zustand ist die Steuereinheit 28a innerhalb der Gargeschirrgehäuseeinheit 32a angeordnet. Die Steuereinheit 28a ist in dem montierten Zustand in dem Zwischenraum 38a angeordnet. In dem Betriebszustand ist die Steuereinheit 28a zu einer Ansteuerung der Antriebseinheit 12a vorgesehen. Die Steuereinheit 28a verwaltet in dem Betriebszustand eine von der Empfangseinheit 16a zu der Energieversorgung bereitgestellte Energie. Die Steuereinheit 28a regelt in dem Betriebszustand einer Energieversorgung von der Empfangseinheit 16a zu der Antriebseinheit 12a.

Die Kochfeldvorrichtung 42a weist eine Induktionseinheit 44a auf (vgl. Fig. 1 bis 3). Die Induktionseinheit 44a ist zu einer Bereitstellung von Energie für die Empfangseinheit 16a des Gargeschirrs 10a vorgesehen. In dem Betriebszustand stellt die Induktionseinheit 44a ein elektromagnetisches Wechselfeld zu der Bereitstellung von Energie für die Empfangseinheit 16a bereit. Die Induktionseinheit 44a versorgt die Empfangseinheit 16a mittels induktiver Energieübertragung mit Energie.

Im vorliegenden Ausführungsbeispiel bildet die Induktionseinheit 44a einen variablen Kochflächenbereich 58a aus. Die Induktionseinheit 44a weist mehrere Induktionsheizelemente 46a auf. Von mehrfach vorhandenen Objekten ist in den Figuren jeweils lediglich eines mit einem Bezugszeichen versehen. Die Induktionsheizelemente 46a sind in Form einer Matrix angeordnet. Alternativ könnten die Induktionsheizelemente insbesondere ein klassisches Kochfeld ausbilden, bei welchem insbesondere durch eine Position der Induktionsheizelemente definierte, fest vorgegebene Heizzonen existieren könnten, welche insbesondere auf der Kochfeldplatte markiert sein könnten.

Im vorliegenden Ausführungsbeispiel weist die Induktionseinheit 44a achtundvierzig Induktionsheizelemente 46a auf. Im Folgenden wird lediglich eines der Induktionsheizelemente 46a beschrieben. Das Induktionsheizelement 46a ist dazu vorgesehen, auf der Kochfeldplatte 50a oberhalb des Induktionsheizelements 46a aufgestelltes Gargeschirr 10a zu erhitzen. In dem Betriebszustand stellt das Induktionsheizelement 46a die Energie für die Empfangseinheit 16a bereit.

Die Kochfeldvorrichtung 42a weist eine Kochfeld-Bedieneinheit 54a zu einer Eingabe und/oder Auswahl von Betriebsparametern auf, beispielsweise einer Heizleistung und/oder einer Heizleistungsdichte und/oder einer Heizzone. Die Kochfeld-Bedieneinheit 54a ist zu einer Ausgabe eines Werts eines Betriebsparameters an einen Bediener vorgesehen.

Die Kochfeldvorrichtung 42a weist die Kochfeld-Steuereinheit 30a auf. Die Kochfeld-Steuereinheit 30a ist dazu vorgesehen, in Abhängigkeit von mittels der Kochfeld-Bedieneinheit 54a eingegebener Betriebsparameter Aktionen auszuführen und/oder Einstellungen zu verändern. Die Kochfeld-Steuereinheit 30a regelt zu einer Durchführung eines Heizvorgangs eine Energiezufuhr zu der Induktionseinheit 44a. Zu der Durchführung des Heizvorgangs ist das Gargeschirr 10a zu einem Aufstellen auf der Kochfeldplatte 50a vorgesehen.

Die Funktionseinheit 14a weist ein Heizelement 52a auf. Alternativ könnte die Funktionseinheit mehrere Heizelemente aufweisen. In dem montierten Zustand ist das Heizelement 52a innerhalb der Gargeschirrgehäuseeinheit 32a angeordnet. Das Heizelement 52a ist in dem montierten Zustand in dem Zwischenraum 38a angeordnet.

Das Heizelement 52a erhitzt in dem Betriebszustand das Innengehäuseteil 36a. In dem montierten Zustand ist das Heizelement 52a in einem Nahbereich eines Bodens des Innengehäuseteils 36a angeordnet. In dem Betriebszustand ist das Heizelement 52a zu einem Erwärmen von Gargut vorgesehen. Das Heizelement 52a ist in dem Betriebszustand zu einem Erwärmen von in dem Lebensmittelaufnahmeraum 22a angeordneten Lebensmitteln vorgesehen.

In dem Betriebszustand sendet die Kochfeld-Steuereinheit 30a Betriebsinformationen an die Steuereinheit 28a der Funktionseinheit 14a. Die Steuereinheit 28a empfängt in dem Betriebszustand die Betriebsinformationen von der Kochfeld-Steuereinheit 30a. In dem Betriebszustand kommuniziert die Steuereinheit 28a mit der Kochfeld-Steuereinheit 30a. In Abhängigkeit von den von der Kochfeld-Steuereinheit 30a empfangenen Betriebsinformationen regelt die Steuereinheit 28a in dem Betriebszustand eine Energieversorgung von der Empfangseinheit 16a zu der Antriebseinheit 12a und/oder zu dem Heizelement 52a. Die Betriebsinformationen könnten beispielsweise Informationen bezüglich der mittels der Kochfeld-Bedieneinheit eingegebenen und/oder ausgewählten Betriebsparameter sein.

Im vorliegenden Ausführungsbeispiel ist die Lebensmittelbearbeitungseinheit 24a als eine Rühreinheit ausgebildet. Die Lebensmittelbearbeitungseinheit 24a ist dazu vorgesehen, innerhalb des Lebensmittelaufnahmeraums 22a angeordnete Lebensmittel zu verrühren.

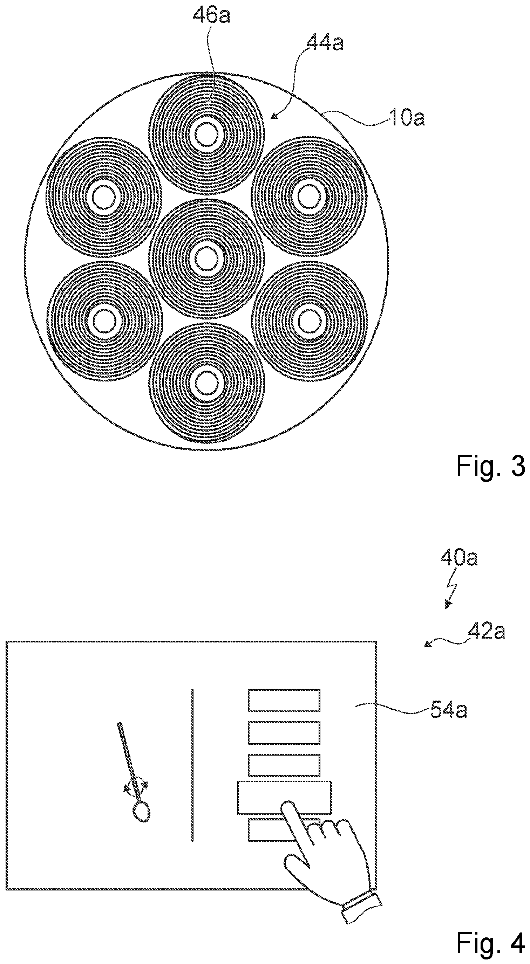

Die Kochfeld-Bedieneinheit 54a ist zu einer Eingabe einer Rotationsgeschwindigkeit der Lebensmittelbearbeitungseinheit 24a vorgesehen (vgl. Fig. 4). Im vorliegenden Ausführungsbeispiel weist die Kochfeld-Bedieneinheit 54a ein berührungsempfindliches Bedienelement zu einer Eingabe der Rotationsgeschwindigkeit der Lebensmittelbearbeitungseinheit 24a auf. Die Kochfeld-Bedieneinheit 54a weist eine Anzeigeeinheit auf. Die Kochfeld-Bedieneinheit 54a stellt einem Bediener eine Auswahl an Rotationsgeschwindigkeiten mittels der Anzeigeeinheit zur Verfügung. Die Anzeigeeinheit ist dazu vorgesehen, eine von einem Bediener ausgewählte Rotationsgeschwindigkeit vergrößert darzustellen.

Die Kochfeld-Steuereinheit könnte beispielsweise in Abhängigkeit von einer Bedieneingabe mittels der Kochfeld-Bedieneinheit die Antriebseinheit zu einer Steuerung der Rotationsgeschwindigkeit der Lebensmittelbearbeitungseinheit ansteuern. Alternativ könnte die Kochfeld-Steuereinheit insbesondere zumindest eine Betriebsinformation an die Steuereinheit übermitteln, welche insbesondere dazu vorgesehen sein könnte, in Abhängigkeit von der Betriebsinformation die Antriebseinheit zu einer Steuerung der Rotationsgeschwindigkeit der Lebensmittelbearbeitungseinheit anzusteuern.

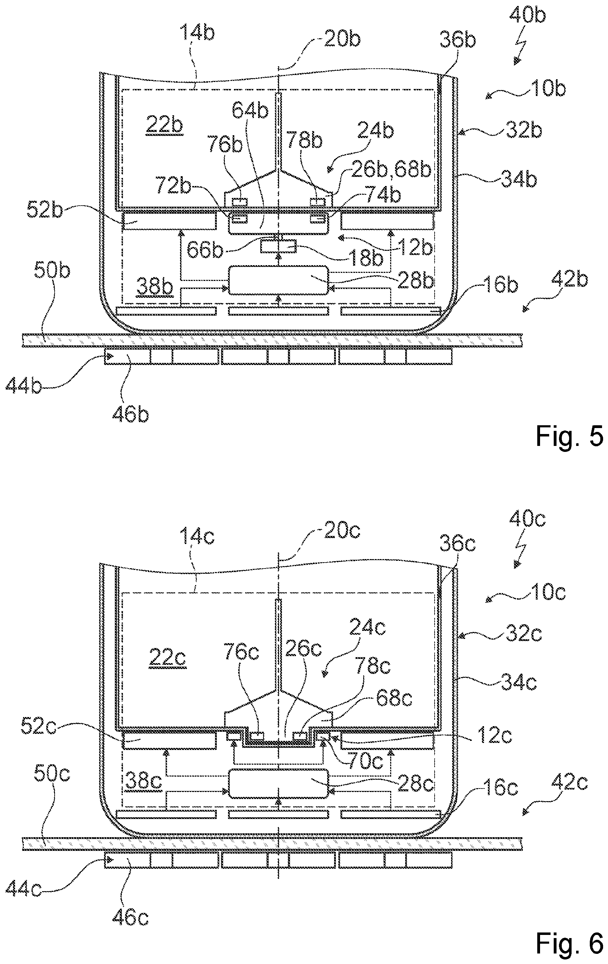

In Fig. 5 und 6 sind weitere Ausführungsbeispiele der Erfindung gezeigt. Die nachfolgenden Beschreibungen beschränken sich im Wesentlichen auf die Unterschiede zwischen den Ausführungsbeispielen, wobei bezüglich gleich bleibender Bauteile, Merkmale und Funktionen auf die Beschreibung des Ausführungsbeispiels der Fig. 1 bis 4 verwiesen werden kann. Zur Unterscheidung der Ausführungsbeispiele ist der Buchstabe a in den Bezugszeichen des Ausführungsbeispiels in den Fig. 1 bis 4 durch die Buchstaben b und c in den Bezugszeichen des Ausführungsbeispiels der Fig. 5 und 6 ersetzt. Bezüglich gleich bezeichneter Bauteile, insbesondere in Bezug auf Bauteile mit gleichen Bezugszeichen, kann grundsätzlich auch auf die Zeichnungen und/oder die Beschreibung des Ausführungsbeispiels der Fig. 1 bis 4 verwiesen werden.

Fig. 5 zeigt ein alternatives Kochsystem 40b, mit einer alternativen Kochfeldvorrichtung 42b. Eine Antriebseinheit 12b einer Funktionseinheit 14b treibt in einem Betriebszustand eine Lebensmittelbearbeitungseinheit 24b der Funktionseinheit 14b an. In dem Betriebszustand stellt die Antriebseinheit 12b zu einem Antrieb der Lebensmittelbearbeitungseinheit 24b ein Magnetfeld bereit. Die Antriebseinheit 12b weist einen Elektromotor 18b auf. Der Elektromotor 18b ist zu einem Antrieb der Lebensmittelbearbeitungseinheit 24b vorgesehen.

Im vorliegenden Ausführungsbeispiel weist die Antriebseinheit 12b einen Permanentmagneten 64b auf. In dem montierten Zustand ist der Permanentmagnet 64b um eine Drehachse 20b rotierbar gelagert. Die Antriebseinheit 12b weist ein Übertragungselement 66b auf. Das Übertragungselement 66b verbindet in dem montierten Zustand den Elektromotor 18b und den Permanentmagneten 64b miteinander. Das Übertragungselement 66b ist als eine Welle ausgebildet.

Der Elektromotor 18b ist zu einem Antrieb des Permanentmagneten 64b vorgesehen. In dem Betriebszustand übermittelt das Übertragungselement 66b eine von dem Elektromotor 18b bereitgestellte Rotationsbewegung an den Permanentmagneten 64b. Der Permanentmagnet 64b erzeugt in dem Betriebszustand das Magnetfeld zu dem Antrieb der Lebensmittelbearbeitungseinheit 24b.

Zu dem Antrieb der Lebensmittelbearbeitungseinheit 24b stellt die Antriebseinheit 12b ein im Wesentlichen um eine Drehachse 20b rotierendes Magnetfeld bereit. Das von der Antriebseinheit 12b bereitgestellte Magnetfeld greift in dem Betriebszustand teilweise in einen Lebensmittelaufnahmeraum 22b eines Gargeschirrs 10b ein. Die Antriebseinheit 12b stellt zu dem Antrieb der Lebensmittelbearbeitungseinheit 24b mittels der Rotationsbewegung des Permanentmagneten 64b das Magnetfeld bereit.

Die Lebensmittelbearbeitungseinheit 24b weist ein Magnetelement 26b auf. Das Magnetelement 26b ist einstückig mit einem Bearbeitungswerkzeug 68b einer Lebensmittelbearbeitungseinheit 24b ausgebildet. In dem Betriebszustand wechselwirkt das Magnetelement 26b mit dem von der Antriebseinheit 12b bereitgestellten Magnetfeld.

Das Magnetelement 26b und der Permanentmagnet 64b sind zueinander korrespondierend ausgebildet. In dem Betriebszustand wechselwirken das Magnetelement 26b und der Permanentmagnet 64b miteinander. Der Permanentmagnet 64b weist zumindest einen ersten magnetischen Pol 72b und einen zumindest zweiten magnetischen Pol 74b auf. Das Magnetelement 26b weist einen zumindest ersten magnetischen Pol 76b und einen zumindest zweiten magnetischen Pol 78b auf. Beispielsweise könnten der Permanentmagnet und das Magnetelement mehrere erste magnetische Pole und mehrere zweite magnetische Pole aufweisen, insbesondere in einem ersten Fall.

In einem ersten Fall könnten die magnetischen Pole 72b, 74b des Permanentmagneten 64b insbesondere untereinander im Wesentlichen identisch ausgebildet sein. Die magnetischen Pole 76b, 78b des Magnetelements 26b könnten insbesondere untereinander im Wesentlichen identisch ausgebildet sein. Beispielsweise könnten die magnetischen Pole 72b, 74b des Permanentmagneten 64b in der Einbaulage der Kochfeldplatte 50b zugewandt angeordnet sein. Die magnetischen Pole 76b, 78b des Magnetelements 26b könnten beispielsweise in der Einbaulage der Kochfeldplatte 50b zugewandt angeordnet sein. Beispielsweise könnten die magnetischen Pole 72b, 74b des Permanentmagneten 64b als Südpole und die magnetischen Pole 76b, 78b des Magnetelements 26b als Nordpole ausgebildet sein. Alternativ könnten die magnetischen Pole 72b, 74b des Permanentmagneten 64c als Nordpole und die magnetischen Pole 76b, 78b des Magnetelements 26b als Südpole ausgebildet sein.

In einem zweiten Fall könnten die magnetischen Pole 72b, 74b des Permanentmagneten 64b insbesondere verschieden ausgebildet sein. Der erste magnetische Pol 72b des Permanentmagneten 64b könnte als Nordpol und der zweite magnetische Pols 74b des Permanentmagneten 64b könnte als Südpol ausgebildet sein. Die magnetischen Pole 76b, 78b des Magnetelements 26b könnten insbesondere verschieden ausgebildet sein. Der erste magnetische Pol 76b des Magnetelements 26b könnte als Südpol und der zweite magnetische Pols 78b des Magnetelements 26b könnte als Nordpol ausgebildet sein.

Fig. 6 zeigt ein alternatives Kochsystem 40c, mit einer alternativen Kochfeldvorrichtung 42c. Eine Antriebseinheit 12c einer Funktionseinheit 14c treibt in einem Betriebszustand eine Lebensmittelbearbeitungseinheit 24c an. In dem Betriebszustand stellt die Antriebseinheit 12c zu einem Antrieb der Lebensmittelbearbeitungseinheit 24c ein Magnetfeld bereit.

In einem Betriebszustand stellt die Antriebseinheit 12c ein im Wesentlichen um eine Drehachse 20c rotierendes Magnetfeld zu einem Antrieb der Lebensmittelbearbeitungseinheit 24c bereit. Das von der Antriebseinheit 12c bereitgestellte Magnetfeld greift in dem Betriebszustand teilweise in einen Lebensmittelaufnahmeraum 22c eines Gargeschirrs 10c ein.

Im vorliegenden Ausführungsbeispiel weist die Antriebseinheit 12c zumindest zwei Elektromagnete 70c auf. Die Antriebseinheit 12c weist mehrere Elektromagnete 70c auf. Im Folgenden wird davon ausgegangen, dass die Antriebseinheit 12c eine Anzahl von n Elektromagneten 70c aufweist.

In einem montierten Zustand sind die Elektromagnete 70c um die Drehachse 20c herum angeordnet. Die Elektromagnete 70c sind in dem montierten Zustand gleichmäßig und im Wesentlichen in einer Ebene um die Drehachse 20c herum angeordnet. In der Ebene sind die Elektromagnete 70c ausgehend von der Drehachse 20c um einen Winkel von im Wesentlichen 360°/n um die Drehachse 20c herum angeordnet.

In einem Betriebszustand ist eine Steuereinheit 28c der Funktionseinheit 14c dazu vorgesehen, in Abhängigkeit von von einer Kochfeld-Steuereinheit 30c übermittelter Betriebsinformationen die Elektromagnete 70c anzusteuern. Die Steuereinheit 28c betreibt in dem Betriebszustand die Elektromagnete 70c. In dem Betriebszustand steuert die Steuereinheit 28c die Elektromagnete 70c mittels Pulsweitenmodulation an. Die Steuereinheit 28c steuert die Elektromagnete 70c mit um im Wesentlichen 360°/n phasenversetzten Signalen an. Die Elektromagnete 70c stellen in Abhängigkeit einer Ansteuerung durch die Steuereinheit 28c das im Wesentlichen um die Drehachse 20c rotierende Magnetfeld zu dem Antrieb der Funktionseinheit 14c bereit.

Die Antriebseinheit 12c ist frei von beweglichen Teilen. In dem Betriebszustand treibt die Antriebseinheit 12c das Magnetelement 26c der Lebensmittelbearbeitungseinheit 24c an. Im vorliegenden Ausführungsbeispiel weist das Magnetelement 26c einen ersten magnetischen Pol 76c und einen zweiten magnetischen Pol 78c auf. Der erste magnetische Pol 76c ist als ein Südpol ausgebildet. Der zweite magnetische Pol 78c ist als ein Nordpol ausgebildet.

### Bezugszeichen

- 10: Gargeschirr
- 12: Antriebseinheit
- 14: Funktionseinheit
- 16: Empfangseinheit
- 18: Elektromotor
- 20: Drehachse
- 22: Lebensmittelaufnahmeraum
- 24: Lebensmittelbearbeitungseinheit
- 26: Magnetelement
- 28: Steuereinheit
- 30: Kochfeld-Steuereinheit
- 32: Gargeschirrgehäuseeinheit
- 34: Außengehäuseteil
- 36: Innengehäuseteil
- 38: Zwischenraum
- 40: Kochsystem
- 42: Kochfeldvorrichtung
- 44: Induktionseinheit
- 46: Induktionsheizelement
- 50: Kochfeldplatte
- 52: Heizelement
- 54: Kochfeld-Bedieneinheit
- 56: Welle
- 58: Variabler Kochflächenbereich
- 64: Permanentmagnet
- 66: Übertragungselement
- 68: Bearbeitungswerkzeug
- 70: Elektromagnet
- 72: Erster magnetischer Pol
- 74: Zweiter magnetischer Pol
- 76: Erster magnetischer Pol
- 78: Zweiter magnetischer Pol

## Patentansprüche

1. Gargeschirr, welches zu einem Aufstellen auf einer Kochfeldplatte (50a-c) zu einer Durchführung eines Heizvorgangs vorgesehen ist, mit einer Funktionseinheit (14a-c) und mit einer Empfangseinheit (16a-c) zu einem kontaktlosen Empfang von Energie und zu einer Energieversorgung der Funktionseinheit (14a-c), wobei die Empfangseinheit (16a-c) zumindest einen Induktor aufweist, **gekennzeichnet durch** zumindest eine Gargeschirrgehäuseeinheit (32a-c), welche zumindest ein einem Lebensmittelaufnahmeraum (22a-c) abgewandtes Außengehäuseteil (34a-c) und zumindest ein dem Lebensmittelaufnahmeraum (22a-c) zugewandtes Innengehäuseteil (36a-c) aufweist, wobei das Außengehäuseteil (34a-c) und das Innengehäuseteil (36a-c) zumindest einen Zwischenraum (38a-c) definieren und die Funktionseinheit (14a-c) wenigstens teilweise innerhalb der Gargeschirrgehäuseeinheit (32a-c) angeordnet ist, wobei ein erster Bestandteil der Funktionseinheit (14a-c) in der Gargeschirrgehäuseeinheit (32a-c) in dem Zwischenraum (38a-c) angeordnet und ein zweiter Bestandteil außerhalb der Gargeschirrgehäuseeinheit (32a-c) in dem Lebensmittelaufnahmeraum (22a-c) angeordnet ist und wobei die Empfangseinheit (16a-c) in dem Zwischenraum (38a-c) angeordnet ist.

2. Gargeschirr nach Anspruch 1, **dadurch gekennzeichnet, dass** die Funktionseinheit (14a-c) zumindest eine Steuereinheit (28a-c) aufweist.

3. Gargeschirr nach Anspruch 2, **dadurch gekennzeichnet, dass** die Steuereinheit (28a-c) dazu vorgesehen ist, in wenigstens einem Betriebszustand eine von der Empfangseinheit (16a-c) zu der Energieversorgung bereitgestellte Energie zu verwalten.

4. Gargeschirr nach Anspruch 2 oder 3, **dadurch gekennzeichnet, dass** die Steuereinheit (28a-c) dazu vorgesehen ist, in wenigstens einem Betriebszustand mit zumindest einer Kochfeld-Steuereinheit (30a-c) zu kommunizieren.

5. Gargeschirr nach einem der vorhergehenden Ansprüche, **dadurch gekennzeichnet, dass** die Funktionseinheit (14a-c) zumindest ein Heizelement (52a-c) aufweist, welches zu einem Erwärmen von Gargut vorgesehen ist.

6. Gargeschirr nach einem der vorhergehenden Ansprüche, **dadurch gekennzeichnet, dass** die Funktionseinheit (14a-c) zumindest eine Lebensmittelbearbeitungseinheit (24a-c) und zumindest eine Antriebseinheit (12a-c) aufweist, die dazu vorgesehen ist, die Lebensmittelbearbeitungseinheit (24a-c) anzutreiben.

7. Gargeschirr nach Anspruch 6, **dadurch gekennzeichnet, dass** die Antriebseinheit (12a-c) dazu vorgesehen ist, zu einem Antrieb der Lebensmittelbearbeitungseinheit (24a-c) zumindest ein Magnetfeld bereitzustellen.

8. Gargeschirr nach Anspruch 6 oder 7, **dadurch gekennzeichnet, dass** die Antriebseinheit (12a-b) zumindest einen Elektromotor (18a-b) aufweist, der dazu vorgesehen ist, die Lebensmittelbearbeitungseinheit (24a-b) anzutreiben.

9. Gargeschirr zumindest nach Anspruch 6 oder 7, **dadurch gekennzeichnet, dass** die Antriebseinheit (12b-c) dazu vorgesehen ist, zu dem Antrieb der Lebensmittelbearbeitungseinheit (24b-c) ein wenigstes im Wesentlichen um zumindest eine Drehachse (20b-c) rotierendes und in einen Lebensmittelaufnahmeraum (22b-c) wenigstens teilweise eingreifendes Magnetfeld bereitzustellen.

10. Gargeschirr nach Anspruch 9, **dadurch gekennzeichnet, dass** die Lebensmittelbearbeitungseinheit (24b-c) zumindest ein Magnetelement (26b-c) aufweist, welches dazu vorgesehen ist, mit dem Magnetfeld zu wechselwirken.

11. Gargeschirr zumindest nach einem der vorhergehenden Ansprüche, **dadurch gekennzeichnet, dass** das Außengehäuseteil (34a-c) und das Innengehäuseteil (36a-c) aus Materialien mit unterschiedlichen magnetischen Eigenschaften bestehen.

12. Gargeschirr nach Anspruch 11, **dadurch gekennzeichnet, dass** das Außengehäuseteil (34a-c) und das Innengehäuseteil (36a-c) zumindest einen Zwischenraum (38a-c) definieren, welcher wenigstens zu einem Großteil mit einem Isolationsmaterial gefüllt ist.

13. Kochsystem mit zumindest einem Gargeschirr (10a-c) nach einem der vorhergehenden Ansprüche und mit zumindest einer Kochfeldvorrichtung (42a-c), die zumindest eine Induktionseinheit (44a-c) aufweist, welche zumindest zu einer Bereitstellung von Energie für die Empfangseinheit (16a-c) des Gargeschirrs (10a-c) vorgesehen ist.

## Claims

1. Cooking utensil, which is provided for positioning on a cooktop plate (50a-c) to perform a heating operation, with a functional unit (14a-c) and with a receiving unit (16a-c) for receiving energy in a contactless manner and for supplying energy to the functional unit (14a-c), wherein the receiving unit (16a-c) has at least one inductor, **characterised by** at least one cooking utensil housing unit (32a-c), which has at least one exterior housing part (34a-c) facing away from a food chamber (22a-c) and at least one interior housing part (36a-c) facing the food chamber (22a-c), wherein the exterior housing part (34a-c) and the interior housing part (36a-c) define at least one intermediate space (38a-c) and the functional unit (14a-c) is at least partially arranged within the cooking utensil housing unit (32a-c), wherein a first part of the functional unit (14a-c) is arranged in the cooking utensil housing unit (32a-c) in the intermediate space (38a-c) and a second part is arranged outside the cooking utensil housing unit (32a-c) in the food chamber (22a-c) and wherein the receiving unit (16a-c) is arranged in the intermediate space (38a-c).

2. Cooking utensil according to claim 1, **characterised in that** the functional unit (14a-c) has at least one control unit (28a-c).

3. Utensil according to claim 2, **characterised in that** the control unit (28a-c) is provided to manage energy supplied by the receiving unit (16a-c) for the supply of energy in at least one operating state.

4. Cooking utensil according to claim 2 or 3, **characterised in that** the control unit (28a-c) is provided to communicate with at least one cooktop control unit (30a-c) in at least one operating state.

5. Cooking utensil according to one of the preceding claims, **characterised in that** the functional unit (14a-c) has at least one heating element (52a-c), which is provided to heat items to be cooked.

6. Cooking utensil according to one of the preceding claims, **characterised in that** the functional unit (14a-c) has at least one food processing unit (24a-c) and at least one drive unit (12a-c), which is provided to drive the food processing unit (24a-c).

7. Cooking utensil according to claim 6, **characterised in that** the drive unit (12a-c) is provided to supply at least one magnetic field to drive the food processing unit (24a-c).

8. Cooking utensil according to claim 6 or 7, **characterised in that** the drive unit (12a-b) has at least one electric motor (18a-b), which is provided to drive the food processing unit (24a-b).

9. Cooking utensil at least according to claim 6 or 7, **characterised in that** the drive unit (12b-c) is provided to supply a magnetic field that rotates at least substantially about at least one rotation axis (20b-c) and engages at least partially in a food chamber (22b-c) to drive the food processing unit (24b-c).

10. Cooking utensil according to claim 9, **characterised in that** the food processing unit (24b-c) has at least one magnetic element (26b-c), which is provided to interact with the magnetic field.

11. Cooking utensil at least according to claim 11, **characterised in that** the exterior housing part (34a-c) and the interior housing part (36a-c) are made of materials with different magnetic properties.

12. Cooking utensil according to claim 11, **characterised in that** the exterior housing part (34a-c) and the interior housing part (36a-c) define at least one intermediate space (38a-c), which is at least largely filled with an insulating material.

13. Cooking system with at least one cooking utensil (10a-c) according to one of the preceding claims and with at least one cooktop apparatus (42a-c), which has at least one induction unit (44a-c), which is provided at least to supply energy for the receiving unit (16a-c) of the cooking utensil (10a-c).

## Revendications

1. Récipient de cuisson qui est ménagé pour une pose sur une plaque de cuisson (50a-c) pour une réalisation d'une opération de chauffage, comprenant une unité fonctionnelle (14a-c) et comprenant une unité de réception (16a-c) pour une réception sans contact d'énergie et pour une alimentation en énergie de l'unité fonctionnelle (14a-c), l'unité de réception (16a-c) présentant au moins un inducteur, **caractérisé par** au moins une unité de boîtier (32a-c) de récipient de cuisson, laquelle présente au moins une partie de boîtier extérieur (34a-c) détournée d'un espace de réception d'aliments (22a-c) et au moins une partie de boîtier intérieur (36a-c) tournée vers l'espace de réception d'aliments (22a-c), la partie de boîtier extérieur (34a-c) et la partie de boîtier intérieur (36a-c) définissant au moins un espace intermédiaire (38a-c), et l'unité fonctionnelle (14a-c) étant disposée au moins en partie à l'intérieur de l'unité de boîtier (32a-c) de récipient de cuisson, dans lequel une première partie de l'unité fonctionnelle (14a-c) est disposée à l'intérieur de l'unité de boîtier (32a-c) dans l'espace intermédiaire (38a-c) et une deuxième partie est disposée à l'extérieur de l'unité de boîtier dans l'espace intermédiaire (22a-c) et dans lequel l'unité de réception (16a-c) est disposée dans l'espace intermédiaire (38a-c).

2. Récipient de cuisson selon la revendication 1, **caractérisé en ce que** l'unité fonctionnelle (14a-c) présente au moins une unité de commande (28a-c).

3. Récipient de cuisson selon la revendication 2, **caractérisé en ce que** l'unité de commande (28a-c) est ménagée, dans au moins un état de fonctionnement, pour gérer une énergie fournie par l'unité de réception (16a-c) pour l'alimentation en énergie.

4. Récipient de cuisson selon la revendication 2 ou 3, **caractérisé en ce que** l'unité de commande (28a-c) est ménagée, dans au moins un état de fonctionnement, pour communiquer avec au moins une unité de commande (30a-c) de plaque de cuisson.

5. Récipient de cuisson selon l'une quelconque des revendications précédentes, **caractérisé en ce que** l'unité fonctionnelle (14a-c) présente au moins un élément de chauffage (52a-c) qui est ménagé pour chauffer des produits à cuire.

6. Récipient de cuisson selon l'une quelconque des revendications précédentes, **caractérisé en ce que** l'unité fonctionnelle (14a-c) présente au moins une unité de traitement d'aliments (24a-c) et au moins une unité d'entraînement (12a-c) qui est ménagée pour entraîner l'unité de traitement d'aliments (24a-c).

7. Récipient de cuisson selon la revendication 6, **caractérisé en ce que** l'unité d'entraînement (12a-c) est ménagée pour fournir au moins un champ magnétique pour un entraînement de l'unité de traitement d'aliments (24a-c).

8. Récipient de cuisson selon la revendication 6 ou 7, **caractérisé en ce que** l'unité d'entraînement (12a- b) présente au moins un moteur électrique (18a-b) qui est ménagé pour entraîner l'unité de traitement d'aliments (24a-b).

9. Récipient de cuisson selon la revendication 6 ou 7, **caractérisé en ce que** l'unité d'entraînement (12b-c) est ménagée, pour l'entraînement de l'unité de traitement d'aliments (24b-c), pour fournir un champ magnétique tournant au moins essentiellement autour d'au moins un axe de rotation (20b-c) et ayant prise au moins en partie dans un espace de réception d'aliments (22b-c).

10. Récipient de cuisson selon la revendication 9, **caractérisé en ce que** l'unité de traitement d'aliments (24b-c) présente au moins un élément magnétique (26b-c) qui est ménagé pour interagir avec le champ magnétique.

11. Récipient de cuisson selon l'une quelconque des revendications précédentes, **caractérisé en ce que** la partie de boîtier extérieur (34a-c) et la partie de boîtier intérieur (36a-c) sont constituées de matières ayant différentes caractéristiques magnétiques.

12. Récipient de cuisson selon la revendication 11, **caractérisé en ce que** la partie de boîtier extérieur (34a-c) et la partie de boîtier intérieur (36a-c) définissent au moins un espace intermédiaire (38a-c) qui est au moins en grande partie rempli avec une matière d'isolation.

13. Système de cuisson comprenant au moins un récipient de cuisson (10a-c) selon l'une quelconque des revendications précédentes et comprenant au moins un dispositif de plaque de cuisson (42a-c) qui présente au moins une unité à induction (44a-c) laquelle est ménagée au moins pour fournir de l'énergie pour l'unité de réception (16a-c) du récipient de cuisson (10a-c).
